Europäisches Patentamt

European Patent Office

Office européen des brevets

(19)

(11) Publication number: **0 035 237**
**A1**

# EUROPEAN PATENT APPLICATION

(12)

(21) Application number: 81101379.6

(22) Date of filing 25.02.81

(51) Int. Cl.³: **G 02 B 5/14**

(30) Priority 29.02.80 JP 24049/80

(43) Date of publication of application: 09.09.81
Bulletin 81/36

(84) Designated Contracting States **DE FR GB NL**

(71) Applicant: Hitachi, Ltd., 5-1, Marunouchi 1-chome,
Chiyoda-ku Tokyo 100 (JP)

(72) Inventor: Matsumura, Hiroyoshi, 264-61, Kubo Oaza
Hidama-cho, Iruma-gun Saitama (JP)
Inventor: Katsuyama, Toshio, D202, 1-47-1, Akatsuki-cho
Hachiouji-shi, Tokyo (JP)
Inventor: Suganuma, Tsuneo, 5-17-5, Naka-arai,
Tokorozawa-shi Saitama (JP)

(74) Representative: Strehl, Peter K.L. Schiff, Dr. A.v. Füner
et al, Dipl. Ing. P. Strehl Dr. U. Schübel-Hopf Dipl. Ing.
D.Ebbinghaus Dr. Ing. D. Finck Patentanwälte
Mariahilfplatz 2&3, D-8000 München 90 (DE)

(54) A single-mode-transmission optical fiber and a method of manufacturing the same.

(57) A single-mode-transmission optical fiber comprising a core of a radius $\underline{a}$ having an arbitrary (not constant) refractive index distribution $n(r)$ in the radial direction $\underline{r}$, the index distribution being expressed by

$n^2(r) = n_1^2 \left\{ 1 - 2\Delta_o f(r) \right\}$, and a cladding having a constant refractive index $n_2$, the radius $\underline{a}$ of the core being:

$$a < \frac{2.405 \lambda}{2\pi Y n_2 \sqrt{2\Delta}}.$$

In these expressions, $n_1$ denotes the maximum refractive index of the core, $\lambda$ denotes the transmission light wavelength,

$$\Delta = \frac{n_1^2 - n_2^2}{2 n_2} = \frac{n_1^2}{n_2^2} \Delta_o,$$

and the normalized frequency V is expressed by

$$V = \frac{2\pi}{\lambda} a n_2 \sqrt{2\Delta}.$$

Y is a solution Y in the case where X and Y are solutions of simultaneous equations:

$$\frac{\partial J_o}{\partial Y} = 0, \qquad \frac{\partial J_o}{\partial X} = 0$$

of a function which is expressed by:

$$J_o = \int_O^\infty \frac{1}{X^2 G^2(YV)} \exp \left\{ -\frac{(\frac{r}{a})^2}{X^2 G^2(YV)} \right\} \cdot$$

$$[1 - f(r) - \frac{Y}{X}]^2 \left\{ 1 - g(r) \right\}]^2 r \, dr$$

where

$$g(r) \begin{cases} 0 & O \leq r < Xa \\ = \\ 1 & Xa \leq r \end{cases}$$

and

$$G(V) = \frac{1}{\sqrt{2}} (0.65 + 1.62 V^{-1.5} + 2.88 V^{-6}).$$

ACTORUM AG

REFRACTIVE INDEX

$n_1$

$n_2$

$-D$ $-a$ $O$ $a$ $D$

RADIUS Y

A Single-Mode-Transmission Optical Fiber and a Method of
Manufacturing the Same

BACKGROUND OF THE INVENTION

This invention relates to a single-mode fiber and a
method of manufacturing the same. More particularly, it relates to a single-mode optical fiber having a core whose
refractive index distribution is not constant but arbitrary
and a cladding whose refractive index is constant, and a
method of manufacturing the same.

At present, owing to the enhancement of the technology of manufacturing optical fibers, the optical fibers have
come into the stage of practical use as communication transmission lines. The optical fibers for communication use are
broadly classified into a multi-mode fiber and a single-
mode fiber. On account of problems in manufacture, many of
the optical fibers having heretofore been put into practical use are the multi-mode transmission fibers. However,
the single-mode fibers have a wider bandwidth than the
multi-mode fibers and can also be endowed with various
functions for many uses, so that future developments and
progress are expected.

It is well known in theory that the single-mode transmission fiber can be realized when, in a concentric construction which consists of a core having a constant refractive index $n_1$ and a cladding made of a material having a constant refractive index $n_2$ lower than the refractive index $n_1$, the normalized frequency

$V = \frac{2\pi}{\lambda} a \sqrt{n_1{}^2 - n_2{}^2}$, where $\lambda$ denotes the wavelength of transmission light and $\underline{a}$ denotes the radius of the core, fulfills the following relationship:

$$2.405 \geqq \frac{2\pi}{\lambda} a \sqrt{n_1{}^2 - n_2{}^2} \qquad \ldots (1)$$

Known as being effective as methods of manufacture for realizing such optical fiber are a method in which a core, or thin glass layers to become a cladding and a core material is/are deposited on the inner wall of a substrate such as silica tube and the resultant tube is drawn at a high temperature directly or after being put into a solid preform rod once, to produce a fine optical fiber, a method which is the rod-in-tube method and in which a rod to become a core material is inserted into a starting glass tube and the resultant tube is drawn at a high temperature similarly to the above, and so on.

In particular, a method in which a thin glass film is formed on the inner wall of a silica tube or the like by the use of the chemical vapor deposition (CVD) process and with a dopant introduced therein in order to attain a predetermined refractive index, a solid preform rod is formed and the preform rod is thereafter drawn at a high temperature is excellent as a method of manufacturing an optical fiber of low transmission loss.

Since, however, the manufacturing process includes the steps of heating and collapsing, a dip is formed in the central part of the core of the optical fiber by the preferential evaporation of the dopant introduced to the end of controlling the refractive index of the glass, and/or the rounding of the refractive index attributed to the diffusion of the dopant etc. occurs between the core and the cladding, so that the refractive index of the final optical fiber does not become the ideal stepped index distribution which is constant in the core part. Accordingly, it becomes difficult to fabricate the single-mode fiber which is determined by Equation (1).

Especially in the single-mode fiber, the radius $\underline{a}$ and the difference of the squares of the refractive indices, $n_1{}^2 - n_2{}^2$, are very small, and hence, the controls thereof are attended with difficulties. It has heretofore been endeavored to render the refractive index of the core constant by removing the dip through the selection of the material of the dopant and through a complicated control of the distribution. In both the cases, however, it is difficult to obtain the single-mode optical fiber having desired characteristics as predetermined. Therefore, the manufactured fiber does not execute the transmission of light at the most effective service wavelength or execute the multi-mode operation thereat to increase the transmission loss. This results in the problem that the yield of production is inferior.

SUMMARY OF THE INVENTION:

It is accordingly an object of this invention to realize an optical fiber which carries out the single-mode transmission reliably and to realize a method of manufacturing a single-mode fiber which is of high yield.

In order to accomplish the object, this invention has realized a single-mode fiber upon finding out the relationship among the refractive index distribution, the wavelength and the core radius in the case where the refractive index of the core of an optical fiber varies complicatedly. Especially, it has the effect that an optical fiber capable of the single-mode transmission at 1.55 $\mu$m, which is known as the most effective wavelength free from the transmission loss in case of transmitting light with an optical fiber, can be readily realized.

More specifically, the invention is characterized in that, when the refractive index n(r) of an optical fiber having an outer radius D at the radial distance $\underline{r}$ from the center of the optical fiber is expressed by:

$$n^2(r) = n_1^2 \left\{1 - 2 \Delta_0 f(r)\right\}$$

where $\qquad 0 \leqq f(r) < 1 \qquad$ for $\qquad 0 \leqq r \leqq a$

and $\qquad f(r) = 1$

and $\qquad n^2(r) = n_2^2 \qquad$ for $\qquad a < r \leqq D$

and the refractive indices of a core have an arbitrary index distribution which is not constant, the radius $\underline{a}$ of the core is made:

$$a < \frac{2.405\ \lambda}{2\ \pi\ Y\ n_2\ \sqrt{2\ \Delta}} .$$

Here, $\lambda$ denotes the wavelength of transmission light, $n_2$ the refractive index of a cladding, $\Delta$ the relative index difference or $\dfrac{n_1^2 - n_2^2}{2\ n_2^2}$, $n_1$ the maximum value of the refractive indices of the core, and Y a value which is determined as follows:

$$J_0 = \int_0^\infty \frac{1}{X^2\ G^2(YV)} \exp\left\{-\frac{(\frac{r}{a})^2}{X^2\ G^2(YV)}\right\}$$

$$\left[1 - f(r) - (\tfrac{Y}{X})^2 \left\{1 - g(r)\right\}\right]^2 r\ dr .$$

where $\qquad g(r) = \begin{cases} 0 & 0 \leqq r < X\ a \\ 1 & X\ a \leqq r \end{cases}$

$$G(Y) = \frac{1}{\sqrt{2}} (0.65 + 1.62 \ V^{-1.5} + 2.88 \ V^{-6})$$

$$V = \frac{2\pi}{\lambda} \ a \ n_2 \ \sqrt{2\Delta} \ .$$

By solving the simultaneous equations of X and Y, $\frac{\partial J_o}{\partial X} = 0$

and $\frac{\partial J_o}{\partial Y} = 0$ of the above function, the value of Y is obtained.

The manufacture of the optical fiber having the characterizing feature described above may be performed as below. Thin layers of materials corresponding to a cladding and a core or to a core are deposited by the CVD process on the inner wall of a silica tube or the like corresponding to a jacket or the cladding, and the resultant tube is collapsed to form a solid glass rod. Alternatively, an optical fiber glass rod (hereinbelow, called the "preform") is formed by the so-called rod-in-tube method. At the stage of the preform, the refractive index distribution is measured to evaluate the constants X and Y. The preform is drawn from its one end at a high temperature so as to establish a drawing ratio of $(\frac{d}{a})^2$ where $\underline{d}$ denotes the radius of the core of the preform and $\underline{a}$ denotes the radius of the core of the optical fiber intended to be finally obtained.

This invention is applicable to fibers of cores having arbitrary index distributions.  In addition, the drawing ratio for obtaining a final fiber is determined by measuring a refractive index distribution at the time when a preform has been prepared.  Therefore, whereas time and expenses have heretofore been required for attaining a predetermined value as the refractive index of a preform, the present invention dispenses with such steps.  This facilitates remarkably the manufacture of the single-mode optical fiber, and provides a very effective measure for the reduction of cost of the product.

The above-mentioned and other features and objects of this invention will become more apparent by reference to the following description taken in conjunction with the accompanying drawings.

BRIEF DESCRIPTION OF THE DRAWINGS:

Figures 1 and 2 are index profiles of an optical fiber having a core of arbitrary refractive index distribution and an optical fiber having a core of constant refractive index distribution, respectively, for explaining the principle of this invention,

Figure 3 is a diagram of a measured relative index distribution of a preform in the manufacturing process of an optical fiber according to this invention, and

Figure 4 is a diagram showing a measured result of the relationship between the wavelength and the optical output in an embodiment of the optical fiber according to this invention.

DESCRIPTION OF THE PREFERRED EMBODIMENTS:

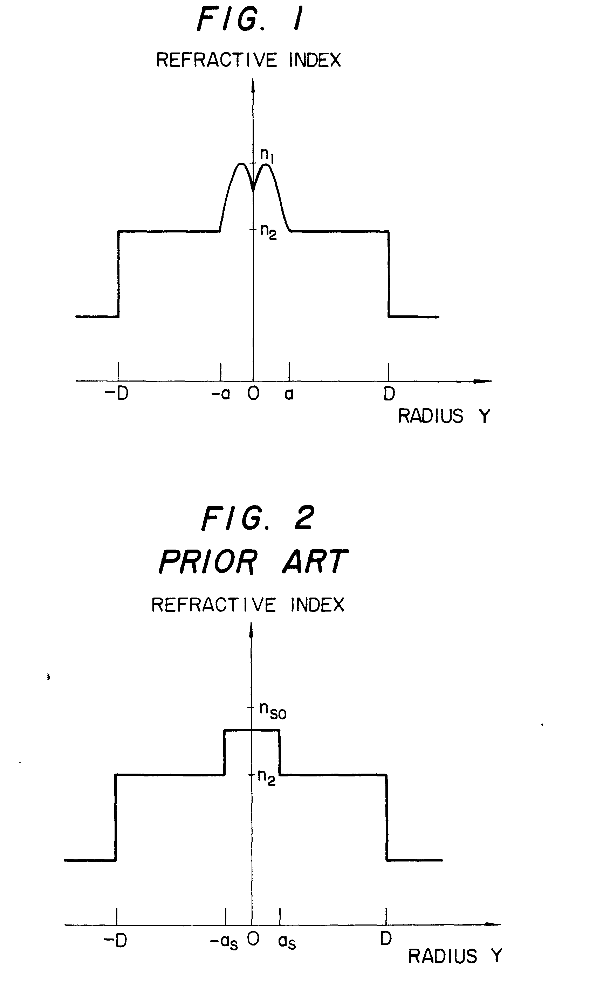

Figure 1 shows a model of the radial refractive index distribution of an optical fiber having a core whose refractive index distribution is not constant, in order to elucidate the principle of this invention.

The refractive index distribution $n(r)$ in the radial direction $\underline{r}$ can be expressed as follows, for the core part or for $0 \leqq r \leqq a$:

$$n^2(r) = n_1{}^2 \left\{ 1 - 2 \, \Delta_o \, f(r) \right\} \qquad \dots (2)$$

where $f(r)$ is an arbitrary varying function of $0 \leqq f(r) \leqq 1$. For a cladding part or for $a < r \leqq D$, it can be expressed by:

$$n^2(r) = n_1{}^2 \left\{ 1 - 2 \, \Delta_o \right\} = n_2{}^2$$

Here, $\Delta$ is called the "relative index difference", and

$$\Delta = \frac{n_1{}^2 - n_2{}^2}{2 \, n_2{}^2} = \frac{n_1{}^2}{n_2{}^2} \, \Delta_o \quad \text{holds.}$$

The electric field $E(r)$ of the dominant mode propagating through the optical fiber having such refractive indices fulfills approximately the following scalar wave equation:

$$\frac{1}{r} \frac{d}{dr} \left( r \, \frac{dE(r)}{dr} \right) + \left\{ k^2 \, n^2(r) - \beta^2 \right\} \, E(r) = 0 \qquad \dots (3)$$

Here, $k = \dfrac{2\pi}{\lambda}$ denotes the wave number, and $\beta$ the propagation constant in the traveling direction of the electric field.

Figure 2 shows the radial refractive index distribution $n_s(r)$ of the so-called stepped index optical fiber whose ideal core has a constant refractive index and which is easy of theoretical analysis. This refractive index distribution is:

$$n_s^2(r) = n_{so}^2 \left\{1 - 2 \Delta_{so} \, g(r)\right\} \qquad \ldots (4)$$

where $g(r) = 0$ for $0 \leq r \leq a_s$

and $\quad g(r) = 1$ for $a_s < r \leq D.$

Here, $n_{so}$ denotes the refractive index of the core, which is constant. $\Delta_s = \dfrac{n_{so}^2 - n_2^2}{2 \, n_2} = \dfrac{n_1^2}{n_2^2} \cdot \Delta_{so}$ denotes the relative index difference, $a_s$ denotes the radius of the core, and the other symbols are the same as in Equation (2).

Similarly to Equation (3), the electric field $E_s(r)$ of the dominant mode propagating through the stepped index optical fiber is expressed by:

$$\frac{1}{r} \frac{d}{dr}\left(r \, \frac{dE_s(r)}{dr}\right) + \left\{k^2 \, n_s^2(r) - \beta_s^2\right\} E_s(r) = 0 \qquad \ldots (5)$$

Here, $\beta_s$ denotes the propagation constant of the stepped index optical fiber.

In order that these optical fibers shown in Figures 1 and 2 may have equivalent propagation characteristics, the following must hold on the basis of Equations (3) and (5):

$$E(r) = E_s(r)$$
$$\beta = \beta_s \qquad\qquad\Bigg\} \qquad\qquad \dots(6)$$

From Equations (3), (5) and (6), the following equation is obtained:

$$\dots(7)$$
$$E_s(r)\{n^2(r) - n_s^2\} = 0$$

Strictly the electric field $E_s(r)$ in Equation (7) can be expressed by the Bessel function. Since, however, the electric field distribution of the stepped index optical fiber is very similar to the Gaussian distribution, the electric field $E_s(r)$ can be approximated as follows:

$$E_s(r) = \frac{1}{\omega_s} \exp\left(- \frac{r^2}{2\,\omega_s^2}\right) \qquad \dots(8)$$

Here, $\omega_s$ denotes a mode spot size which can be approximately expressed as follows:

$$\omega_s = a_s\, G(V_s) \qquad\qquad \dots(9)$$

$$G(V_s) = \frac{1}{\sqrt{2}}\,(0.65 + 1.62\,V_s^{-1.5} + 2.88\,V_s^{-6})$$

$$V_s = \frac{2\pi}{\lambda}\,a_s\,n_2\,\sqrt{2\,\Delta_s}$$

Accordingly, the optical fiber having the arbitrary index distribution as shown in Figure 1 can be converted into the equivalent, stepped index optical fiber. Here, letting $\underline{a}$ denote the radius of the core having the arbitrary refractive indices and $V = \frac{2\pi}{\lambda}\,a\,n_2\sqrt{2\Delta}$, the equivalent

core radius $a_{SE}$ and the normalized frequency $V_{SE}$ thereof can be expressed with constants X and Y, as follows:

$$
\left.\begin{array}{l}
a_S = a_{SE} = X\,a \\[2mm]
V_S = V_{SE} = Y\,V
\end{array}\right\} \qquad \dots (10)
$$

Accordingly, the evaluation of the equivalent stepped index distribution results in evaluating the constants X and Y. In order to evaluate X and Y, Equation (7) is substituted into Equations (8) – (10), and the resultant equations are arranged, whereupon X and Y which minimize the following equation may be finally found by the optimization method for X and Y.

$$
J_O = \int_0^\infty \frac{1}{X^2\,G^2(YV)}\,\exp\left\{-\,\frac{\left(\frac{r}{a}\right)^2}{X^2\,G(YV)}\right\}
$$

$$
\left[\,1 - f(r) - \left(\frac{Y}{X}\right)^2 \left\{1 - g(r)\right\}\,\right]^2\,r\,dr \quad \dots(11)
$$

The minimum values of X and Y can be uniquely determined by solving the following simultaneous equations:

$$
\frac{\partial J_O}{\partial X} = 0, \qquad \frac{\partial J_O}{\partial Y} = 0 \qquad \dots (12)
$$

Accordingly, in order that the optical fiber having the normalized frequency $V_{SE} = Y\,V$ in Equation (10) may effect the single-mode transmission, the following relationship may be met:

$$
2.405 \geq Y\,V = Y\,\frac{2\,\pi}{\lambda}\,a\,n_2\,\sqrt{2\Delta}
$$

That is,

$$a \leqq \frac{2.405\ \lambda}{2\ \pi\ Y\ n_2\ \sqrt{2\Delta}}$$

Now, there will be described an example of a single-mode fiber according to this invention manufactured on the basis of the principle described above.

On the inner wall of a silica tube made of $SiO_2$ and to become a cladding, thin layers made of 4.2 mol-% of $GeO_2$ and 95.8 mol-% of $SiO_2$ and to become a core were formed by the CVD process. The resultant tube was heated and collapsed to form a solid preform. Since these manufacturing steps have heretofore been well known, the detailed explanation will be omitted.

The preform had an outer diameter (2D) of 13 mm, and it was sliced at an axial thickness of approximately 80 $\mu$m to form a small disc. The disc was observed with an interference microscope, to measure the refractive index distribution of the core in the radial direction.

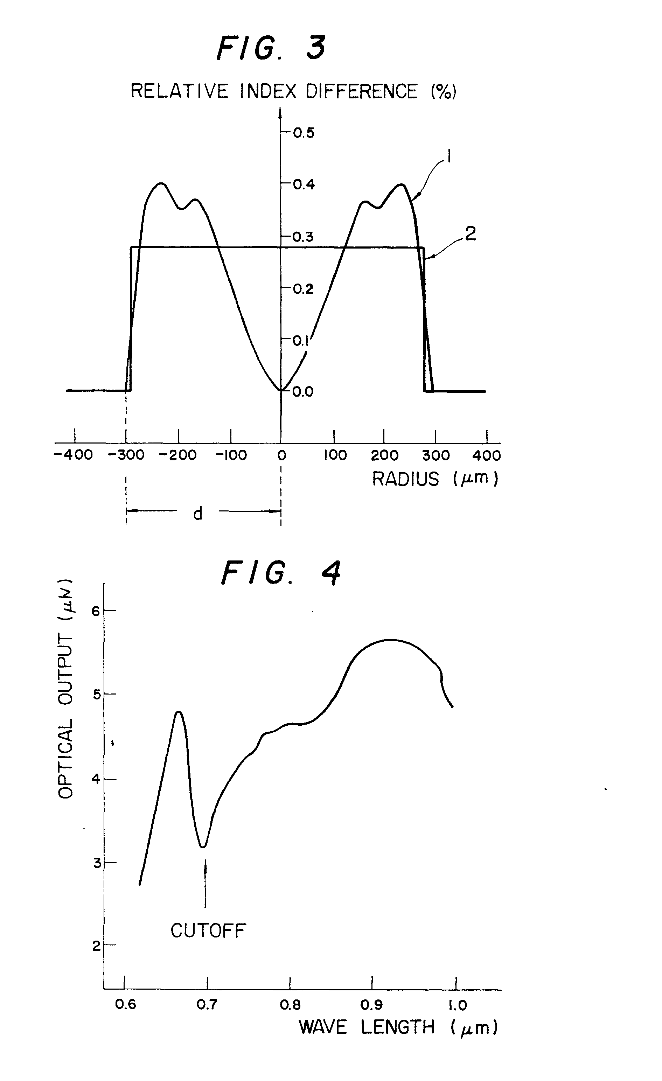

Figure 3 shows the result of the measurement, in which the axis of abscissas represents the distance in the radial direction and the axis of ordinates the refractive index. In the figure, a curve 1 indicates actually-measured values in terms of the relative index difference, while a curve 2 indicates an equivalent, stepped index distribution which has a propagation

0035237

characteristic equivalent to the curve 1 and which
has been obtained on the basis of the foregoing principle.

It is understood that the refractive indices of
the actual measurement 1 form a complicated index distribution
in which a rounding appears around the core and the
cladding and in which a deep dip appears in the central
part.

The preform is drawn at a high temperature and
finally becomes an optical fiber. The index distributions
of the preform and the optical fiber are scarcely different,
and merely the index distribution is compressed in
the radial direction in the optical fiber. This is
because the index distribution is almost determined
by the process up to the preform and becomes stable.
In the heating and drawing step, the index distribution
undergoes no appreciable substantial change.

Accordingly, the foregoing values X and Y can be
obtained when the preform has been finished.

It was immediately seen that the core radius (d)
of the preform was about 300 $\mu$m and that the maximum
relative 'index difference $\Delta$ was about 0.4 %. The index
distribution obtained indicated the function f(r) in Equation (2)
and Equation (11), and when the evaluated result was
substituted into Equations (11) and (12), X = 0.95
and Y = 0.79 were calculated. Thus, the equivalent

core radius ($d_s$) in the equivalent, stepped index preform became $d_s$ = 285 $\mu$m from $d_s$ = X d = 0.95 x 300, while the relative index difference $\Delta_s$ was evaluated from

$$\Delta_s = (\frac{Y}{X})^2 \Delta$$ to be $\Delta_s$ = 0.277 %.

From the preform, there was produced a single-mode fiber whose transmission wavelength was a semiconductor laser wavelength $\lambda$ = 0.83 $\mu$m deemed to be the most effective wavelength in the optical transmission and which had a normalized frequency $V_S$ = 2.08 in order to lessen the micro-bending loss. To this end, the core radius ($a_s$ = X a) of the equivalent, stepped index optical fiber was evaluated to be $a_s$ = 2.53 $\mu$m by substituting the foregoing values into:

$$a_s = \frac{V_S \lambda}{2 \pi n_2 \sqrt{2 \Delta_s}}$$

Accordingly, in order to obtain the desired optical fiber from the preform, a

$$\text{drawing ratio} = (\frac{d_s}{a_s})^2 = (\frac{d}{a})^2$$

might be established. In other words, the drawing ratio might be made $(\frac{2 \pi n_2 \text{ Y X d} \sqrt{2\Delta}}{2.405 \lambda})^2$ . The substitution of the numerical values resulted in about 12,705 times. At this time, the outside diameter of the optical fiber (the diameter of the cladding) was 115 $\mu$m.

Figure 4 shows the measured result of the relationship between the used light wavelength $\lambda$ ($\mu$m) and the optical output ($\mu$W) in the case of the optical fiber according to the example.

A method of the measurement was such that the optical fiber of about 40 cm produced by the example was arranged to be rectilinear, that incoherent light was caused to enter an input end of the optical fiber by the use of an objective lens having a magnification of about 20, that an optical filter capable of varying a wavelength to pass therethrough was situated between the lens and a light source, and that light emerging from the other end of the optical fiber was measured with a photomultiplier.

Now, it will be proved from the measured result that, in spite of having the complicated index distribution, the fiber of the present example had the characteristic as previously designed, in other words, the normalized frequency V becoming a value close to 2.08 at the wavelength $\lambda = 0.83$ $\mu$m.

As apparent from the experimental result, the optical output obtained exhibits an abrupt change near a wavelength $\lambda = 0.7$ $\mu$m. This appears because the secondary mode, $LP_{11}$ mode is excited along with the dominant mode at light wavelengths of and below 0.7 $\mu$m.
Since the $LP_{11}$ mode is excited, the apparent number
of aperture increases and the quantity of light entering
the optical fiber increases. From the above fact, the
abrupt change indicates the cutoff wavelength ($\lambda_c$) of
the secondary mode $LP_{11}$. The reason why the waveform
becomes complicated is that it appears as the product
between the mode transmission characteristics and the
spectral component of the inc-herent light source used
as the light source. It can be easily conjectured
that, if a coherent light source whose wavelength is
variable can be used, the waveform will change in a
stepped fashion with the boundary at the cutoff wavelength $\lambda_c$.

In the stepped index fiber, the secondary mode
$LP_{11}$ appears when the value of the normalized frequency
$V_s$ is 2.405 or greater. In the optical fiber of the
above example, the wavelength $\lambda_c$ which gives this $V_s$ value
is approximately 0.7, which is understood to substantially
correspond to the case of the stepped index fiber. Accordingly, from

$$2.405 = \frac{2\pi}{0.7} a_s \sqrt{n_1^2 - n_2^2},$$

there holds $2\pi a_s \sqrt{n_1^2 - n_2^2} = 2.405 \times 0.7 = 1.6835.$
Therefore, the value of the normalized frequency $V$
at the time when the light of the wavelength $\lambda = 0.83$ $\mu$m
is used becomes approximately 2.05, and it is understood to become close to the aimed value 2.08 of the design described previously.

As set forth in the foregoing example, according to this invention, an optical fiber having a desired single-mode transmission characteristic as predetermined can be readily realized even when the refractive index distribution of its core varies complicatedly, and complicated steps for the control of refractive indices in the manufacturing process of a preform as have heretofore been required are dispensed with, which in turn reduces the production cost of the optical fiber.

CLAIMS:

1. A single-mode optical fiber comprising a cladding which has a constant refractive index $n_2$, and a core of a radius $\underline{a}$ which is surrounded by said cladding, characterized in that the refractive indices of the core are greater than said refractive index $n_2$ and have in the radial direction $\underline{r}$ an arbitrary index distribution $n(r)$ expressed by

$$n^2(r) = n_1^2 \left\{ 1 - 2 \, \Delta_o \, f(r) \right\} \quad \text{(where } 0 \le f(r) \le 1\text{)},$$

said radius $\underline{a}$ of said core being:

$$a < \frac{2.405 \, \lambda}{2 \, \pi \, Y \, n_2 \, \sqrt{2\Delta}}$$

X and Y being solutions of simultaneous equations of:

$$\frac{\partial J_o}{\partial X} = 0, \qquad \frac{\partial J_o}{\partial Y} = 0$$

of a function which is expressed as follows, by letting $n_1$ denote a maximum refractive index of said core and $\lambda$ denote a transmission light wavelength thereof, so that the relative index difference thereof is denoted by

$$\Delta = \frac{n_1^2 - n_2^2}{2 \, n_2^2} = \frac{n_1^2}{n_2^2} \, \Delta_o \quad \text{and that the normalized frequency is}$$

denoted by $V = \frac{2 \, \pi}{\lambda} \, a \, n_2 \, \sqrt{2\Delta}$ :

$$J_o = \int_0^\infty \frac{1}{x^2\, G^2(YV)}\, \exp\left\{ - \frac{(\frac{r}{a})^2}{x^2\, G^2(YV)} \right\}$$

$$\left[1 - f(r) - (\tfrac{Y}{X})^2 \left\{1 - g(r)\right\}\right]^2 r\, dr$$

where $\quad g(r) = \begin{cases} 0 & 0 \leq r < X\,a \\ 1 & X\,a \leq r \end{cases}$

and

$$G(V) = \frac{1}{\sqrt{2}}(0.65 + 1.62\, V^{-1.5} + 2.88\, V^{-6}).$$

2.  A method of manufacturing a single-mode optical fiber wherein a preform is formed and is drawn at a high temperature into the optical fiber, characterized by measuring the refractive index distribution of the preform after completion thereof, solutions X and Y of simultaneous equations of:

$$\frac{\partial J_o}{\partial X} = 0, \qquad \frac{\partial J_o}{\partial Y} = 0$$

being obtained as to a function which is expressed as follows, by letting f(r) denote said refractive index distribution and d the radius of the core of said preform:

$$J_o = \int_0^\infty \frac{1}{x^2\, G^2(YV)}\, \exp\left\{ - \frac{(\frac{r}{d})^2}{x^2\, G^2(YV)} \right\}$$

$$\left[1 - f(r) - (\tfrac{Y}{X})^2 \left\{1 - g(r)\right\}\right]^2 r\, dr$$

where $\quad g(r) = \begin{cases} 0 & 0 \leq r \leq X\,d \\ 1 & X\,d \leq r \end{cases}$

and

$$G(V) = \frac{1}{\sqrt{2}}\,(0.65 + 1.62\ V^{-1.5} + 2.88\ V^{-6}),$$

and making the drawing ratio greater than

$$\left(\frac{2\ \pi\ n_2\ Y\ X\ d\ \sqrt{2\Delta}}{2.405\ \lambda}\right)^2$$

(where $n_2$ denotes a maximum refractive index of the preform core, and $\Delta$ a relative index difference).

3. The method of claim 2, characterized in that the step of forming said preform comprises forming a material to become a core part, on an inner wall of a silica tube by the CVD process, and heating the resultant silica tube into a solid glass rod.

4. The method of claim 2, characterized in that the step of forming said preform comprises forming materials to become a cladding part and a core part, on an inner wall of a silica tube successively by the CVD process, and heating the resultant silica tube into a solid glass rod.

# FIG. 1

REFRACTIVE INDEX

# FIG. 2
# PRIOR ART

REFRACTIVE INDEX

## FIG. 3

RELATIVE INDEX DIFFERENCE (%)

RADIUS ($\mu$m)

## FIG. 4

CUTOFF

WAVE LENGTH ($\mu$m)

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| | PHYSICS AND CHEMISTRY OF GLASSES, Vol. 21, No. 1, February 1980 S.R. NORMAN "Fabrication and Evaluation of Single Mode Fibres" page 53 to 57 * page 54, above right * -- | 1,2 | G 02 B 5/14 |
| | REVIEW OF THE ELECTRICAL COMMUNICATION LABORATORIES, Vol. 26, No. 3/4, March/April 1978, A. KAWANA et al. "Fabrication of Low Loss Single-Mode Fiber" pages 468 to 475 * fig. 2 * -- | 3,4 | **TECHNICAL FIELDS SEARCHED** (Int. Cl.³)  C 03 B 17/02  G 02 B 5/14 |
| A | US - A - 4 089 586 (W.G. FRENCH et al.) * complete document * -- | | |
| A | OPTICAL AND QUANTUM ELECTRONICS, Vol. 10, No. 4, 1978 W.A. GAMBLING et al. "Wave Propagation in a Single-Mode Fibre with Dip in the Refractive Index" pages 301 to 309 ---- | | **CATEGORY OF CITED DOCUMENTS**  X: particularly relevant  A: technological background  O: non-written disclosure  P: intermediate document  T: theory or principle underlying the invention  E: conflicting application  D: document cited in the application  L: citation for other reasons  &: member of the same patent family, corresponding document |

| | The present search report has been drawn up for all claims | |
|---|---|---|
| Place of search Berlin | Date of completion of the search 25-05-1981 | Examiner FUCHS |

EPO Form 1503.1 06.78